# EUROPÄISCHE PATENTSCHRIFT

(11) **EP 2 532 247 B1**
(45) Veröffentlichungstag und Bekanntmachung des Hinweises auf die Patenterteilung: **29.01.2014**
(21) Anmeldenummer: 12167300.8
(22) Anmeldetag: 09.05.2012
(51) Int. Cl.: A23C 3/027, A23L 2/46, A23L 3/04

(54) **Produktvorwärmung mit Wärmepumpe**
Product pre-warming with heat pump
Préchauffage de produit avec pompe à chaleur

(30) Priorität: 10.06.2011 DE 102011077375
(43) Veröffentlichungstag der Anmeldung: 12.12.2012
(73) Patentinhaber: Krones AG, 93073 Neutraubling (DE)
(72) Erfinder: Wagner, Falko Jens, 4070 Kirke Hyllinge (DK); Münzer, Jan Karsten, 25840 Friedrichstadt (DE)
(74) Vertreter: Grünecker, Kinkeldey, Stockmair & Schwanhäusser

(56) Entgegenhaltungen:
- EP-A1- 1 529 448
- DE-A1-102007 003 919
- DE-A1-102007 003 976
- FR-A1- 2 520 984

## Beschreibung

Die Erfindung betrifft ein Verfahren zur Heißabfüllung von Flüssigkeiten, insbesondere Säften, mit einem Kurzzeiterhitzer, der einen ersten Wärmetauscher umfasst, einer Füllstation zum Abfüllen der Flüssigkeiten in Behälter, beispielsweise Flaschen, und einem Kühltunnel, der aus einer Mehrzahl von Kühlzellen besteht, zur Abkühlung der abgefüllten Behälter mittels einer Kühlflüssigkeit, beispielsweise Wasser, gemäß des Oberbegriffs des Patentanspruchs 1. Die Erfindung betrifft ebenso eine entsprechende Vorrichtung nach Patentanspruch 7 zur Durchführung des Verfahrens.

Im Stand der Technik ist es bekannt, dass Flüssigkeiten, insbesondere safthaltige Getränke oder Ähnliches, vor der Abfüllung erwärmt werden und dann erwärmt / heiß abgefüllt werden. Die heiße Abfüllung sorgt hierbei für die Sterilisation des Behälters, ferner dient sie gleichzeitig zur Pasteurisation des Produktes, etwa des Getränks. Nach der Abfüllung der Flüssigkeiten in Behälter werden die Produkte in den Behältern, die typischerweise verschlossen sind, zur besseren Handhabbarkeit und ferner zu Lagerungszwecken wenigstens auf Umgebungstemperatur oder eine gewünschte Lagerungstemperatur heruntergekühlt.

Zum Erwärmen des Saftes dient typischerweise Dampf, beispielsweise Wasserdampf, der durch einen Wärmetauscher hindurch geleitet wird und damit die Wärme aus dem Dampf auf das zu erwärmende/vorzuwärmende Produkt, also den Getränkesaft, überträgt. Anschließend kommen zum Zwecke der Abkühlung typischerweise ein Kühlturm und/oder eine Kälteanlage zum Einsatz.

Beispielsweise kann die zu erwärmende Flüssigkeit bei etwa Zimmertemperatur in den Wärmetauscher hineingeleitet werden und wird darin auf Temperaturen von 80 - 90° C erwärmt. Danach folgt typischerweise die Abfüllung in Behälter. Zur Kühlung der mit dem Produkt gefüllten Behälter wird typischerweise eine Kühlstrecke wie etwa ein Kühltunnel verwendet, der mit einem Kühlturm verbunden ist. Im einfachsten Fall wird die in den Behältern mit der abgefüllten, noch heißen Flüssigkeit vorhandene Wärmeenergie an die Umgebung abgegeben. Diese Energie geht dem System also verloren.

Im Hinblick auf eine zumindest teilweise Rückgewinnung der in der Flüssigkeit in den Behältern vorhandenen Wärme ist es im Stand der Technik bekannt, Wärmetauscher einzusetzen. Das bei der Kühlung verwendete Kühlwasser erwärmt sich im Rahmen des Kühlprozesses. Ein Wärmetauscher kann dem derart erwärmten Kühlwasser Wärmeenergie entziehen, so dass diese wieder zur Vorwärmung genutzt werden kann. Beispielsweise zeigt die DE 103 51 689 A1 das Rückführen von Prozessftüssigket zum Zwecke des Einsatzes der Wärme aus der Kühlflüssigkeit im Hinblick auf die Vorwärmung. Dabei ist jedoch ein Problem, dass ein Wärmetauscher nur bestimmte, geeignete Energien übertragen kann, so dass das erwärmet Kühlwasser eine bestimmte Temperatur erreichen muss, bevor es zum Wärmeübertrag auf andere Flüssigkeiten verwendet werden kann.

Die DE 10 2007 003 976 A1 beschreibt ferner eine Pasteurisierungsvorrichtung mit integrierter Wärmepumpe, wobei eine Pasteurisierungsvorrichtung mehrere gleichartige Pasteurisierungszonen oder Pasteurisierungssegmente umfasst, wobei Wärmeenergie aus einem kälteren Segment der Pasteurisierungsvorrichtung einem wärmeren Segment der Pasteurisierungsvorrichtung zugeführt werden kann. Dabei werden in der Pasteurisierungsvorrichtung ausschließlich abgefüllte, verschlossene Behälter behandelt. Dabei ist die Wärmepumpe in die Pasteurisierungsvorrichtung integriert, wodurch Aufbau und Komplexität der Pasteurisierungsvorrichtung erhöht werden.

Die EP 1 529 448 A1 bezieht sich auf ein Verfahren zur Reduzierung des Energieverbrauchs in Gefäßbehandlungsmaschinen, das sich dadurch auszeichnet, dass die Abfülltemperatur des Getränks vor dem Abfüllen in Behälter durch die Wärmemenge der Pasteurisierungsanlage erhöht und die befüllten Behälter mit dieser erhöhten Produkttemperatur der Pasteurisierungsanlage zugeführt werden, wobei die rückgeführte gekühlte Prozessflüssigkeit mindest in einer Zone der Pasteurisierungsanlage eingesetzt wird.

Die FR 2 520 984 A1 bezieht sich auf einen Pasteurisiervorrichtung für verschiedene Nahrungsmittel mit wenigstens einer Wärmepumpe, die Wärme aus einem Bad mit bereits benutzter Pasteurisierflüssigkeit aufnimmt, wobei der größte Teil dieser Wärme zum Erhitzen von Pasteurisierflüssigkeit verwendet wird, die in einem ersten und zentralen Pasteurisierer zum Pasteurisieren von Produkten durch Erwärmen verwendet wird.

Die DE 10 2007 003919 A1 bezieht sich auf ein Verfahren sowie eine Vorrichtung zur Pasteurisierung von abgefüllten Lebensmitteln, beispielsweise für die Pasteurisierung von Fruchtsäften, Bieren oder sonstiger in Flaschen oder Dosen abgefüllten Lebensmitteln.

Angesichts der oben genannten Probleme und des diskutierten Stands der Technik ist es Aufgabe der vorliegenden Erfindung, eine Vorrichtung zur Heißabfüllung von Flüssigkeiten bereitzustellen, mit einer effizienten Wärmerückgewinnung, die zusätzlich robust und einfach handhabbar sein soll.

Diese Aufgabe wird mit einem Verfahren zur Heißabfüllung von Flüssigkeiten, insbesondere Säften, entsprechend des Patentanspruchs 1 gelöst. Ferner wird diese Aufgabe ebenfalls mit einer entsprechenden Vorrichtung, die zur Durchführung des Verfahrens geeignet ist, nach Patentanspruch 7 gelöst.

Die Erfindung stellt ein Verfahren zur Heißabfüllung von Flüssigkeiten, insbesondere Säften, bereit, mit einem Kurzzeiterhitzer, der einen ersten Wärmetauscher umfasst, einer Füllstation zum Abfüllen der Flüssigkeiten in Behälter, beispielsweise Flaschen, und einem Kühltunnel, der aus einer Mehrzahl von Kühlzellen besteht, zur Abkühlung der abgefüllten Behälter mittels einer Kühlflüssigkeit, beispielsweise Wasser, wobei die Flüssigkeiten vor dem Abfüllen in Behälter in der Füllstation in dem Kurzzeiterhitzer erwärmt werden, indem Wärmeenergie der beim Abkühlvorgang erwärmten Kühlflüssigkeit des Kühltunnels mittels einer separaten Wärmepumpe zum Kurzzeiterhitzer zugeführt wird.

In dem erfindungsgemäßen Verfahren wird die abzufüllende Flüssigkeit, das Produkt, beispielsweise Getränkesaft, im Kurzzeiterhitzer erwärmt, und zwar bereits vor der Abfüllung. Dazu wird die Wärmeenergie aus der Kühlflüssigkeit, die sich beim Abkühlvorgang in den Kühlzellen des Kühltunnels erwärmt, mittels der separaten Wärmepumpe dem Kurzzeiterhitzer zugeführt. Dadurch ist es nicht mehr nötig, die zu erwärmende Flüssigkeit mit Dampf zu erhitzen. Hier- durch wird eine beträchtliche Vereinfachung der Vorrichtung erzielt, da die Dampferhitzungsvorrichtung, Zuleitung und Ableitung des Dampfes entfallen kann. Ferner ist es nicht mehr nötig, ein bestimmtes Temperaturniveau der Kühlflüssigkeit zu erzielen, bevor sie dann durch einen Wärmetauscher fließt, um einen geeigneten Wärmeübertrag im Wärmetauscher zu leisten. Hierdurch kann der Nutzungsgrad der Rückgewinnung erhöht werden. Die Leistungszahl, COP (Coefficient of Performance), der Wärmepumpe ist dabei deutlich besser als beim Einsatz von einem Wärmetauscher. Die Wärmepumpe ermöglicht dabei gleichzeitiges Kühlen/Heizen bei geringen Kosten. Die Kosten entstehen im Wesentlichen im Hinblick auf den anfallenden elektrischen Strom, der zum Betrieb der Wärmepumpe verwendet werden kann.

In dem erfindungsgemäßen Verfahren wie oben beschrieben kann die von der Wärmepumpe zugeführte Wärmeenergie auf die Flüssigkeiten mittels des ersten Wärmetauschers zu deren Erwärmung übertragen werden. Hierdurch ist die von der Wärmepumpe zugeführte Wärmeenergie, beispielsweise mit Hilfe einer geeigneten Flüssigkeit, wie etwa Wasser, in dem ersten Wärmetauscher auf die zu erwärmende Flüssigkeit übertragbar. Nach dem Wärmeaustausch kann die durch den Wärmeaustausch nunmehr kühlere Flüssigkeit wieder an die Wärmepumpe zurück geleitet werden.

In dem erfindungsgemäßen Verfahren wie oben beschrieben kann das Erwärmen der Flüssigkeiten vollständig durch die mittels der Wärmepumpe zugeführte Wärmeenergie geschieht. Die Wärmepumpe und die aus den Kühlzellen entnommene Wärmeenergie sorgen für das Erwärmen des Produkts.

In der erfindungsgemäßen Vorrichtung wie oben beschrieben kann das Vorwärmen der abzufüllenden Flüssigkeiten, beispielsweise Getränkesäfte, vollständig durch die mittels der Wärmepumpe zugeführte Wärmeenergie geschehen. D.h., mit Hilfe der aus dem Kühltunnel entnommenen Wärmeenergie und der Wärmepumpe und der der Wärmepumpe zugeführten elektrischen Energie kann die Erwärmung der Flüssigkeiten vor dem Abfüllen vollständig geschehen, ohne dass zusätzliche Erwärmungsschritte notwendig sind.

In dem erfindungsgemäßen Verfahren wie oben beschrieben kann zum Erwärmen der Flüssigkeiten vor der Abfüllung zusätzlich ein zweiter Wärmetauscher in Reihe mit der Wärmepumpe derart vorgesehen sein, dass die erwärmte Kühlflüssigkeit vom Kühltunnel zum zweiten Wärmetauscher und danach zur Wärmepumpe gelangt; so dass zumindest ein Teil der Wärmeenergie der erwärmten Kühlflüssigkeit zunächst mittels des zweiten Wärmetauschers an die zu erwärmende Flüssigkeit übertragen werden kann und danach wenigstens ein weiterer Teil der Wärmeenergie mittels der Wärmepumpe an den Kurzzeiterhitzer zur weiteren Erwärmung der Flüssigkeiten übertragen werden kann.

Bezüglich der Erwärmung des Produktes vor der Abfüllung kann also der zweite Wärmetauscher in Reihe, also seriell mit der Wärmepumpe vorgesehen sein. Das hinsichtlich des Erwärmens der Flüssigkeiten serielle Verbinden des zweiten Wärmetauschers mit der Wärmepumpe ermöglicht es also insbesondere, das Temperaturniveau in der Wärmepumpe zu erhöhen und damit die Leistungszahl der Wärmepumpe zu verbessern. Hierbei erfolgen typischerweise zur Erwärmung der abzufüllenden Flüssigkeit zwei Schritte, die Wärmeübertragung mittels des zweiten Wärmetauschers insbesondere für direkt übertragbare Wärmeenergien aus dem Kühltunnel an die Flüssigkeit und anschließend das Erhöhen des Energieniveaus auf die für die Vorwärmung der Flüssigkeit, also des Produkts, vorgesehene Temperatur mit Hilfe der Wärmepumpe.

In dem erfindungsgemäßen Verfahren wie oben beschrieben kann zum Erwärmen der Flüssigkeiten vor der Abfüllung zusätzlich ein zweiter Wärmetauscher parallel zur Wärmepumpe derart vorgesehen sein, dass wenigstens ein Teil der erwärmten Kühlflüssigkeit vom Kühltunnel zum zweiten Wärmetauscher gelangt und wenigstens ein weiterer Teil der erwärmten Kühlflüssigkeit vom Kühltunnel zur Wärmepumpe gelangt, so dass zumindest ein Teil der Wärmeenergie der erwärmten Kühlflüssigkeit mittels des zweiten Wärmetauschers an die zu erwärmende Flüssigkeit übertragen werden kann, und wenigstens ein weiterer Teil der Wärmeenergie mittels der Wärmepumpe an den Kurzzeiterhitzer zur weiteren Erwärmung der Flüssigkeiten übertragen werden kann.

Bezüglich der Erwärmung des Produktes vor der Abfüllung kann also der zweite Wärmetauscher parallel zur Wärmepumpe vorgesehen sein. Entsprechend der hinsichtlich des Erwärmens des Produkts parallelen Schaltung der Wärmepumpe und des zweiten Wärmetauschers kann beispielsweise eine erste Kaskade von Kühlzellen zur direkten Wärmeübertragung durch den zweiten Wärmetauscher verwendet werden. Diese Kühlflüssigkeit wird beispielsweise nach dem Wärmeaustausch im zweiten Wärmeaustauscher wieder an die Kühlzellen zurückgeleitet. Eine zweite, parallele Kaskade von Kühlzellen ist beispielsweise mit der Wärmepumpe verbunden beispielsweise zusätzlich mit Hilfe einer einfachen Pumpe, wodurch das Energieniveau von der Wärmeenergie der zweiten Kaskade erhöht werden kann, so dass dieses Energieniveau zur Erwärmung der abzufüllenden Flüssigkeiten auf die gewünschte Abfülltemperatur angehoben werden kann.

In dem erfindungsgemäßen Verfahren wie oben beschrieben kann der Teil der erwärmten Kühlflüssigkeit, der zum zweiten Wärmetauscher gelangt, wärmer sein als der Teil der erwärmten Kühlflüssigkeit, der zur Wärmepumpe gelangt.

Beispielsweise ist die Temperatur in der Gruppe der ersten Kühlzellen, die typischerweise sequentiell angeordnet sind, höher als in der Gruppe der zweiten Kühlzellen, die ebenfalls typischerweise sequentiell angeordnet sind. Durch die parallele Verschaltung von zweitem Wärmetauscher entsprechend der ersten Kaskade und der Wärmepumpe entsprechend der zweiten Kaskade lassen sich ein noch höheres Energieniveau und damit eine höhere Leistungszahl der Wärmepumpe erzielen. Die Steuerung der erfindungsgemäßen Vorrichtung wie oben beschrieben kann beispielsweise mit einer geeigneten Steuereinheit etwa eines Computers erfolgen.

Die Erfindung umfasst ferner eine Vorrichtung zum Durchführen des Verfahrens zur Heißabfüllung von Flüssigkeiten wie oben beschrieben.

In der erfindungsgemäßen Vorrichtung können der Kurzzeiterhitzer, die Füllstation und der Kühltunnel jeweils separat ausgebildet sein. Jedes dieser Elemente kann also jeweils separat von den anderen Elementen ausgebildet sein. Die Verbindungen der Elemente kann durch geeignete Förder- und / oder Transportelemente vorgesehen sein, beispielsweise Rohre zum Transport des Produkts oder anderer Flüssigkeiten, die als Hilfsflüssigkeiten zur Wärmeübertragung dienen können, sowie Förderbänder oder Transporteinrichtung für Behälter.

In der erfindungsgemäßen Vorrichtung kann der erste Wärmetauscher des Kurzzeiterhitzers wie oben beschrieben kann einen Plattenwärmetauscher, PWT, oder einen Röhrenwärmetauscher, RWT, umfassen. D.h., es können gängige Wärmetauschertypen verwendet werden, um die von der Wärmepumpe zugeführte Wärmeenergie auf die zu erwärmende Flüssigkeit zu übertragen. Damit ist die Wärmeübertragung der zu erwärmenden Flüssigkeit im Kurzzeiterhitzer typischerweise entkoppelt vom Abfüllvorgang, der typischerweise nach dem Erwärmen folgt, und dem darauffolgenden Kühlvorgang.

Die in der erfindungsgemäßen Vorrichtung eingesetzte Wärmepumpe kann beispielsweise eine Kompressionswärmepumpe, beispielsweise eine elektrisch angetriebene Kompressionswärmepumpe, eine Ammoniak-Wärmepumpe oder eine Wärmepumpe mit transkritischem CO₂-Prozess umfassen. D.h. es können gängige Typen von Wärmepumpen eingesetzt werden, insbesondere auch solche, in denen Ammoniak oder CO₂ als Kühlmittel eingesetzt wird. Letzteres ermöglicht den Einsatz von besonders energieeffizienten Wärmepumpen, wobei gleichzeitig auf Kühlmittel wie Stickstoff oder Halogen-Alkane verzichtet werden kann, wobei letztere in Abfüllanlagen möglicherweise unerwünscht sein können und Halogen-Alkane darüber hinaus in ihrer Eigenschaft als klimaschädliche Gase nicht gewünscht werden können.

Die Wärmepumpe der erfindungsgemäßen Vorrichtung, wie oben beschrieben, kann typischerweise zwischen einer der Kühlzellen des Kühltunnels und dem ersten Wärmetauscher des Kurzzeiterhitzers vorgesehen sein. Die Wärmepumpe kann also zwischen dem mehrzelligen Kühltunnel und dem Wärmetauscher vorgesehen sein. Dabei kann beispielsweise das erwärmte Kühlmittel/die erwärmte Kühlflüssigkeit aus dem Kühltunnel mittels einer einfachen Pumpe zur Wärmepumpe gepumpt werden. Nach dem Wärmeaustausch wird die dann kühlere Flüssigkeit wieder zum Kühltunnel zurückgeleitet, beispielsweise erneut mit einer zusätzlichen Pumpe.

In der erfindungsgemäßen Vorrichtung, wie oben beschrieben, sind beispielsweise die Kühlzellen des Kühltunnels miteinander verbunden derart, dass Kühlflüssigkeit von einer Kühlzelle in eine oder mehrere benachbarte Kühlzellen gepumpt werden kann, beispielsweise insbesondere von einer kälteren Kühlzelle in eine wärmere Kühlzelle. Nach der Abfüllung durchlaufen die abgefüllten, verschlossenen Behälter den Kühltunnel, d.h. eine Kühlstrecke mit mehreren ähnlichen oder gleichartigen Kühlzellen. Die Kühlzellen unterscheiden sich typischerweise durch die Temperaturen, die jeweils in einer Kühlzelle herrschen.

Jede der Kühlzellen enthält typischerweise eine Berieselungsanlage oder Sprühvorrichtung, um die Behälter mit Kühlflüssigkeit zu besprühen. Die zu kühlenden Behälter werden also beispielsweise mit Wasser berieselt. Dadurch kann ein Wärmeaustausch zwischen dem Kühlwasser und der in den Behältern abgefüllten Flüssigkeit entstehen.

Die Kühlflüssigkeit wird beispielsweise aufgefangen, und zwar typischerweise für jede Kühlzelle separat. Typischerweise gibt es ein Temperaturgefälle von der ersten bis zur letzten der Mehrzahl der Kühlzellen, wobei typischerweise die erste Kühlzelle die wärmste und die letzte Kühlzelle die kälteste Kühlzelle ist. Die Reservoirs / Sammelbecken für die Kühlflüssigkeit / das Kühlwasser der Kühlzellen sind beispielsweise miteinander verbunden, so dass Kühlwasser von einer Kühlzelle in eine benachbarte Kühlzelle gepumpt werden kann und dort gegebenenfalls auch erneut zur Berieselung eingesetzt werden kann.

In der erfindungsgemäßen Vorrichtung kann die Wärmepumpe zwischen der Kühlzelle mit der höchstens Temperatur des erwärmten Kühlmittels und dem ersten Wärmetauscher vorgesehen sein. Typischerweise handelt es sich dabei um die erste Kühlzelle des Kühltunnels.

In der erfindungsgemäßen Vorrichtung fließt typischerweise bei Verwendung von zwei Wärmetauschern die zu erwärmende Flüssigkeit den ersten und den zweiten Wärmetauscher. Die beiden Wärmetauscher sind also seriell im Kurzzeiterhitzer vorgesehen.

Es gilt also die Nutzung einer Wärmepumpe, die separat vom Kühltunnel, separat von der Füllstation und dem Kurzzeiterhitzer vorgesehen sein kann, bietet die Möglichkeit einer effizienten und hohen Energierückgewinnung im Rahmen der Produktvorwärmung. Die Verwendung von einer Wärmepumpe in paralleler oder serieller Verschaltung mit einem Wärmetausch ermöglicht eine weitere Erhöhung der Effizienz und gleichzeitig eine Verbesserung der Leistungszahl der Wärmepumpe.

Der Erfindungsgegenstand wird anhand der nachfolgenden Zeichnungen beispielhaft erläutert.

Es zeigen:
- Fig. 1:: eine konventionelle Produktvorwärmung von Flüssigkeiten, beispielsweise Getränkesäften, mit nachfolgender Abkühlung mittels einer Kühlstrecke, die mit einem Kühlturm verbunden ist;
- Fig. 2:: eine schematische Darstellung der erfindungsgemäßen Vorrichtung zur Vorwärmung eines Produktes, d.h. Flüssigkeiten, in einem Kurzzeiterhitzer vor der Abfüllung und nachfolgende Abkühlung;
- Fig. 3:: eine weitere Ausbildung einer Vorrichtung zur Heißabfüllung von Flüssigkeiten mit einer Wärmepumpe und zusätzlich einem Wärmeaustauscher, die seriell verbunden sind;
- Fig. 4: eine weitere Ausbildung einer Vorrichtung zur Heißabfüllung von Flüssigkeiten mit einer Wärmepumpe und einem Wärmetauscher, die parallel vorgesehen sind.

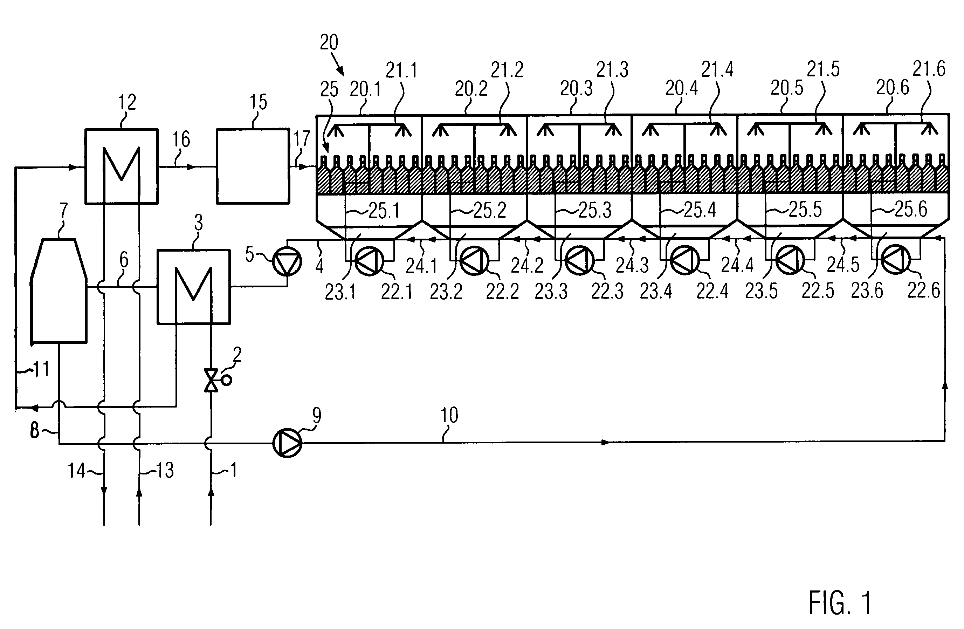

Die Fig. 1 zeigt eine konventionelle Produktvorwärmung wie im Stand der Technik bekannt. Über eine Produktzuleitung 1 wird, gesteuert über ein Ventil 2, das Produkt, d.h. eine zu erwärmende und nach dem Abfüllen wieder abzukühlende Flüssigkeit, etwa ein Saftgetränk, zu einem Wärmetauscher 3 geleitet. Das Produkt fließt durch den Wärmetauscher 3 hindurch. Erwärmtes Kühlmittel, etwa Kühlwasser aus der Kühlstrecke 20, wird dazu verwendet, das Produkt teilweise zu erwärmen. Das erwärmte Kühlwasser aus der Kühlstrecke/Kühltunnel 20 wird über eine Leitung 4 und eine Pumpe 5 zu dem Wärmetauscher 3 gepumpt.

Das Produkt wird über eine Leitung 11 zu einem weiteren Wärmetauscher 12, der im Wesentlichen als Kurzzeiterhitzer dient, geleitet Der Wärmetauscher/Kurzzeiterhitzer 12 wird von

Dampf, typischerweise Wasserdampf, durchströmt, der seine Wärmeenergie auf das durch den Kurzzeiterhitzer 12 strömende Produkt überträgt. Der Dampf wird den Wärmetauscher/Kurzzeiterhitzer 12 mit Hilfe der Leitung 13 zugeleitet und der nach dem Wärmeaustausch kühlere Dampf wird durch die Leitung 14 wieder vom Kurzzeiterhitzer 12 weg geleitet. Dabei kann der in diesem Vorgang zum Einsatz kommende Dampf, beispielsweise Wasserdampf, durch konventionelle Mittel erwärmt werden.

Die Erwärmung des Produktes im Kurzzeiterhitzer 12 kann bis auf Temperaturen von 80 - 90° C geschehen, abhängig von der für das Produkt gewünschten Temperatur. Das erwärmte Produkt kann über geeignete Zuleitungen 16, die rein schematisch mit einem Pfeil angezeigt sind, sich aber räumlich getrennt vom Kurzzeiterhitzer 12 befinden können, zu einer Füllstation 15 transportiert werden. Die Füllstation 15 kann eine geeignete Vorrichtung zur Heißabfüllung des Produkts, also der erwärmten Flüssigkeit, in Behälter 25, beispielsweise Flaschen, umfassen, wie sie im Stand der Technik bekannt ist. Innerhalb der Vorrichtung 15 werden die Behälter 25 typischerweise verschlossen und dann mittels einer Transporteinrichtung 17, die wiederum rein schematisch als Pfeil angedeutet ist, zu der Kühlstrecke/dem Kühltunnel 20 geleitet.

Der Kühltunnel/die Kühlstrecke 20 besteht aus mehreren Kühlzellen. Rein beispielhaft sind in Fig. 1 sechs Kühlzellen 20.1, 20.2, 20.3, 20.4, 20.5 und 20.6 gezeigt. Die abgefüllten Behälter 25 durchlaufen mit Hilfe eines geeigneten Transportmediums (hier nicht gezeigt), etwa eines Förderbandes, die beispielsweise unmittelbar benachbarten Kühlzellen. Dabei können die abgefüllten Behälter 25, etwa Flaschen, von der einen zur anderen Kühlzelle direkt geleitet werden.

Die Kühlzellen umfassen ferner Berieselungsanlagen 21.1, 21.2, 21.3, 21.4, 21.5 und 21.6, die schematisch dargestellt sind. Diese dienen dazu, die zu kühlenden verschlossenen Behälter 25 mit einer Kühlflüssigkeit, beispielsweise Wasser, zu berieseln, um sie somit abzukühlen. Das Kühlwasser wird durch Kühlwasserzuleitungen 25.1, 25.2, 25.3, 25.4, 25.5 und 25.6 den Berieselungsvorrichtungen zugeleitet. Dabei kann das verwendete Kühlmittel von Kühlmittelbecken aufgefangen werden, welche mit den Bezugszeichen 23.1, 23.2, 23.3, 23.4, 23.5 und 23.6 bezeichnet sind. Aus den bezeichneten Kühlmittelbecken 23.1, 23.2, 23.3, 23.4, 23.5 und 23.6 kann zumindest ein Teil des Kühlwassers mit Hilfe von Pumpen 22.1, 22.2, 22.3, 22.4, 22.5 und 22.6 jeweils erneut zum Berieseln verwendet werden. Ferner kann auch frisches, beispielsweise kühleres Kühlmittel, etwa Wasser zugeleitet werden (hier nicht gezeigt). Ferner kann erwärmtes Kühlwasser, das im Wärmetauscher 3 einen Teil seiner Wärme an das Produkt abgegeben hat und das nachfolgend mittels eines Kühlturms 7 erneut gekühlt wurde, über eine Zuleitung 8, eine konventionelle Pumpe 9 und eine Zuleitung 10 erneut dem Kühltunnel 20 zugeleitet werden.

In Fig. 1 ist beispielhaft gezeigt, dass das mit Hilfe des Kühlturms 7 erneut gekühlte Wasser, also nach dem Kühlvorgang im Kühlturm 7, der kältesten der Kühlzellen 20.1, 20.2, 20.3, 20.4, 20.5 und 20.6, in diesem Falle der Kühlzelle 20.6, zugeleitet wird. Die Kühlmittelsammelbecken 23.1, 23.2, 23.3, 23.4, 23.5 und 23.6 sind jeweils benachbart, so dass wenigstens zwei benachbarte Kühlzellen durch geeignete Leitungen 24.1, 24.2, 24.3, 24.4 und 24.5 verbunden sein können. In diesem Beispiel kann das Kühlmittel im Bereich vor dem Wärmetauscher 3 beispielhaft Temperaturen im Bereich von etwa 40 - 70 ° C besitzen. Nachdem ein Teil der Wärmeenergie an das Produkt übertragen wurde, kann das Kühlmittel eine geringfügig niedrigere Temperatur von etwa 35° bis 40 °C haben, bevor es mittels der Leitung 6 in den Kühlturm 7 geleitet wird. Nach dem Kühlen, d.h. nach dem Durchlaufen des Kühlturms 7, kann das Kühlmittel beispielsweise eine Temperatur von etwa 30 ° C besitzen. Dabei können diese Temperaturangaben jedoch schwanken und von der Maschinenlänge, der Länge er Leitungen und der Anzahl der Kühlzellen beispielsweise abhängig sein. Ebenso kann der Durchsatz am Kühlturm 7 zwischen 17 m³ und 43 m³ pro Stunde schwanken.

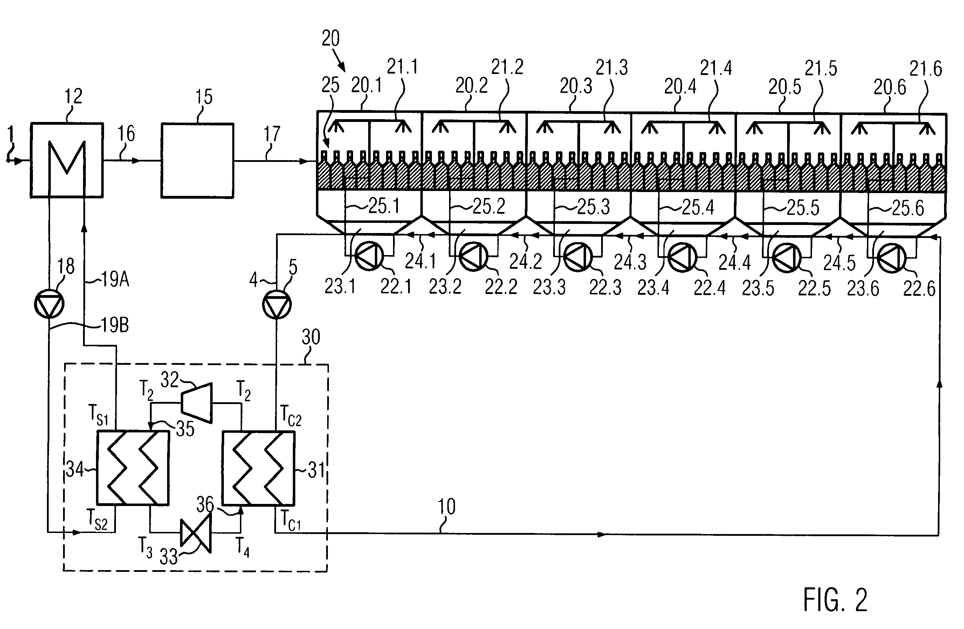

Fig. 2 zeigt eine Vorrichtung zur Heißabfüllung von Flüssigkeiten/Produkten, insbesondere Getränkesäften, entsprechend der vorliegenden Erfindung. Fig. 2 zeigt erneut einen Kühltunnel/eine Kühlstrecke 20, wie bereits in Fig. 1 beschrieben, so dass die Elemente dieses Kühltunnels 20 nicht erneut beschrieben werden. In Fig. 2 wird über eine Produktzuleitung 1 das Produkt, also die zu erwärmende Flüssigkeit, etwa Getränkesaft, einem Wärmetauscher/Kurzzeiterhitzer 12 zugeleitet.

Wie bereits in Fig. 1 beschrieben, wird die Flüssigkeit nach dem Erwärmen mittels einer rein schematisch dargestellten Leitung 16 zu einer Füllstation 15 geleitet. Dort wird die erhitzte/erwärmte Flüssigkeit im Behälter 25, beispielsweise Flaschen, abgefüllt. Die Behälter 25 werden in der Füllstation nach dem Abfüllen verschlossen. Die verschlossenen, heißen Behälter 25 werden mittels einer geeigneten Transportstrecke 17 dem Kühltunnel/der Kühlstrecke 20 zugeleitet.

Im Unterschied zu der Fig. 1, wird in der Fig. 2 jedoch die zu erwärmende Flüssigkeit, also das Produkt, im Kurzzeiterhitzer 12, nicht mit Hilfe von Dampf erhitzt, sondern mit Hilfe einer geeigneten Flüssigkeit, beispielsweise Wasser, die von einer Wärmepumpe, die mit dem Bezugszeichen 30 versehen ist, zugeleitet wird. Die Wärmepumpe 30 leitet über die Zuleitung 19a eine geeignete erhitzte Flüssigkeit zum Kurzzeiterhitzer/Wärmetauscher t2, in dem die Wärmeüber- tragung auf das Produkt stattfindet. Nach der Wärmeübertragung kann mit Hilfe einer Pumpe 18 über die Leitung 19b die nunmehr kühlere Flüssigkeit wieder zurück zur Wärmepumpe 30 geleitet werden.

Die Wärmepumpe 30 umfasst ein Element 34 zur Wärmeabgabe, ein Element 31 zur Wärmeaufnahme, sowie eine Drossel 33 und einen Verdichter 32. Innerhalb der Wärmepumpe sind die Zirkulationswege durch Pfeile 35 und 36 bestimmt. Die Temperaturen auf der rechten, kühleren Seite der Wärmepumpen sind mit T_{C2} und T_{C1} bezeichnet. Dabei kann T_{C1} in etwa 16° C betragen, es sind aber ebenso andere Temperaturen je nach Maschinenauslegung, Länge der Maschine, Isolierung usw. möglich. Ebenso kann die Temperatur T_{C2} etwa 30 bis 32°C betragen, es sind ebenso andere Temperaturen möglich. Beispielhaft kann die Temperatur T₁ etwa 28° C betragen, die Temperatur T₂ etwa 96° C, die Temperatur T₃ etwa 28° C und die Temperatur T₄ etwa 27° C. Dabei sollen diese Temperaturangaben rein beispielhaft verstanden sein und sind ebenso andere Temperaturangaben möglich je nach Auslegung der Wärmepumpe 30, ihrer Leistungszahl, der zugeführten elektrischen Energie und anderer Parameter entsprechend der Auslegung der Maschinen.

In der Fig. 2 wird aus der Kühlstrecke 20 erwärmte Kühlflüssigkeit an die Wärmepumpe 30 geleitet. Dabei wird beispielsweise aus einer der Kühlzellen der Kühlstrecke 20, beispielsweise aus der wärmsten der Kühlzellen, die erwärmte Kühlflüssigkeit über eine Zuleitung 4 mittels einer konventionellen Pumpe 5 zur Wärmepumpe 30 gepumpt, d.h. insbesondere zum Element 31 der Wärmepumpe 30. Nach dem Durchlaufen der Wärmepumpe 30, d.h. insbesondere des Elements 31 der Wärmepumpe 30, wird die nunmehr kühlere Kühlflüssigkeit über die Leitung 10 wieder in die Kühlstrecke zurückgeleitet. Hierzu kann noch eine weitere Hilfspumpe, hier nicht gezeigt, verwendet werden. Typischerweise wird die Kühlflüssigkeit an die kälteste der Kühlzellen 20.1, 20.2, 20.3, 20.4, 20.5 und 20.6, zurückgeleitet, in diesem Beispiel die Kühlzelle mit dem Bezugszeichen 20.6. Die beispielhaft gezeigte Verwendung einer Wärmepumpe 30 separat von der Kühlstrecke 20, dem Kurzzeiterhitzer 12 und der Füllstation 15, ermöglicht einen höheren Nutzungsgrad der Rückgewinnung von Wärmeenergie und bei einem geringen Kostenaufwand ermöglicht die Verwendung der Wärmepumpe 30 gleichzeitiges Kühlen oder auch Heizen.

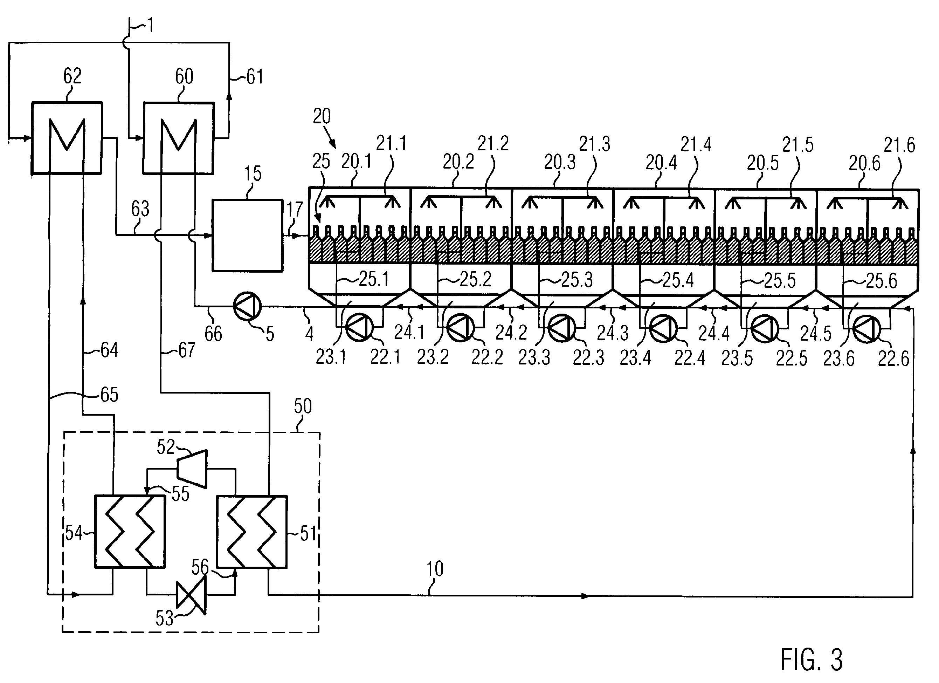

Die Fig. 3 zeigt eine weitere Weiterbildung im Rahmen der vorliegenden Erfindung. Wiederum wird eine Kühlstrecke/ein Kühltunnel 20 verwendet, wie er bereits mit Bezug auf Fig. 1 und 2 beschrieben worden ist. Dabei sind wiederum gleiche Elemente mit gleichen Bezugszeichen bezeichnet und werden hier nicht erneut genannt.

In der erfindungsgemäßen Vorrichtung in Fig. 3 wird wiederum die zu erwärmende Flüssigkeit, also das Produkt, über die Produktzuleitung 1 der Vorrichtung zugeleitet. Die Vorrichtung umfasst dabei zwei Wärmetauscher, die mit den Bezugszeichen 60 und 62 bezeichnet sind. Die Wärmetauscher 62 und 60 sind beispielsweise in Serie im Kurzzeiterhitzer vorgesehen. Die Wärmetauscher 60 und 62 sind seriell über die Leitung mit dem Bezugszeichen 61 verbunden.

Nach Erhitzung des Produktes, nach Durchlaufen des Wärmetauschers 62 wird das Produkt über ein geeignetes Leitungssystem 63 zur Füllstation 15 geleitet. Die Füllstation 15 kann eine Füllstation sein, wie sie bereits in Bezug auf Fig. 1 und Fig. 2 beschrieben worden ist. Nach dem Abfüllvorgang und Verschließen der Behälter 25, in die die erwärmte Flüssigkeit abgefüllt worden ist, kann über eine geeignete Transportstrecke 17 der Transport der Behälter 25 an den Kühltunnel 20 vorgenommen werden. Ebenso ist die Verwendung des erwärmten Kühlmittels, beispielsweise Kühlwasser aus der Kühlstrecke/dem Kühlturm 20, seriell vorgesehen. Der zweite Wärmetauscher 60 ist dabei also bezüglich der Erwärmung seriell zur Wärmepumpe 50 vorgesehen. Über eine Zuleitung 4 und eine Pumpe 5 wird mittels der Zuleitung 66 das erwärmte Kühlmittel aus der Kühlstrecke 20 in den Wärmetauscher 60 geleitet oder gepumpt. Dort wird beispielsweise das erwärmte Kühlmittel verwendet, um in einem ersten Schritt, d.h. für direkt übertragbare Energien das Produkt zu erwärmen. Es erfolgt somit bereits mittels des Wärmetauschers 60 eine Erwärmung des über die Zuleitung 1 zugeführten Produkts.

Nach der Erwärmung im Wärmetauscher 60 wird das erwärmte Produkt an den Wärmetauscher 62 weitergeleitet. Die durch Verwendung im Wärmetauscher 60 leicht im Temperaturniveau abgekühlte Kühlflüssigkeit wird vom Wärmetauscher 60 mittels der Zuleitung 67 an die Wärmepumpe 50 geleitet.

Die Wärmepumpe 50 umfasst Wärmepumpenelement 51 zur Wärmeaufnahme, Wärmepumpenelement 54 zur Wärmeabgabe, sowie Verdichter 52 und Drossel 53. Die Bezugszeichen 55 und 56 bezeichnen die Fließrichtung innerhalb der Wärmepumpe 50. Aus dem Element 54 der Wärmepumpe 50 wird über die Zuleitung 64 eine geeignete Flüssigkeit zur Wärmeübertragung an den ersten Wärmetauscher 62 geleitet, wodurch das Produkt auf die gewünschte Zieltemperatur erwärmt werden kann. Nach dem Erwärmen im Wärmetauscher 62 wird die abgekühlte Flüssigkeit über die Zuleitung 65 wieder zurück zur Wärmepumpe 50 geleitet. Dort wird sie in das Element 54 der Wärmepumpe 50 geleitet. Die nach Durchlaufen des Elements 51 abgekühlte Kühlflüssigkeit wird über die Leitung 10 wieder an den Kühltunnel 20 zurückgeleitet. Dabei wird, wie beispielhaft in Fig. 3 gezeigt, diese Kühlflüssigkeit an die kälteste der Zellen 20.1, 20.2, 20.3, 20.4, 20.5 und 20.6 des Kühltunnels, Zelle 20.6, geleitet.

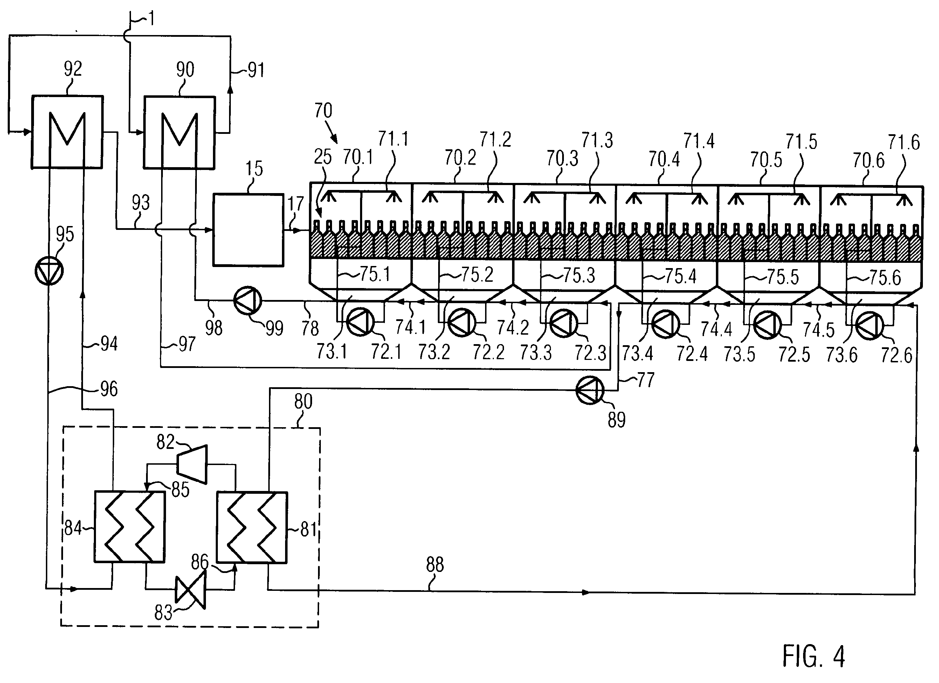

Fig. 4 zeigt eine weitere Weiterbildung entsprechend der vorliegenden Erfindung. In Fig. 4 wird ein Kühltunnel/eine Kühlstrecke 70 gezeigt, die/der zwar den in den Fig. 1 - 3 gezeigte Kühlstrecken ähnelt, jedoch dahingehend unterschiedlich ist, dass Gruppen von Kühlzellen der Kühlstrecke das aus ihnen entnommene Kühlwasser an unterschiedliche Elemente abgeben können. Es wäre jedoch ebenso möglich, eine Kühlzelle wie in Fig. 1 - 3 gezeigt zu verwenden.

Die Kühlstrecke 70 umfasst, beispielhaft gezeigt, sechs Kühlzellen 70.1, 70.2, 70.3, 70.4, 70.5 und 70.6. Diese Kühlzellen umfassen Berieselungseinrichtungen/Berieselungsanlagen 71.1, 71.2, 71.3, 71.4, 71.5 und 71.6. Diese Berieselungsanlagen 71.1, 71.2, 71.3, 71.4, 71.5 und 71.6, die rein schematisch zweiarmig gezeigt sind, erhalten das zum Berieseln verwendete Kühlmittel, etwa Wasser, über Zuleitungen 75.1, 75.2, 75.3, 75.4, 75.5 und 75.6. Das nach der Berieselung von den Behältern 25 abtropfende oder ableckende Kühlwasser wird in jeweiligen Sammelbehältern 73.1, 73.2, 73.3, 73.4, 73.5 und 73.6, die offen sein können, in der jeweiligen Kühlzelle 70.1, 70.2, 70.3, 70.4, 70.5 und 70.6 aufgefangen. Das aufgefangene Kühlwasser kann zumindest teilweise über Pumpen 72.1, 72.2, 72.3, 72.4, 72.5 und 72.6 wieder zur Berieselung verwendet werden. Dabei kann - hier nicht gezeigt - ebenfalls kühleres Frischwasser aus anderen Zuleitungsquellen verwendet werden. Ferner kann kühleres Wasser, das von einer Wärmepumpe 80 zurückströmt, den Kühlzellen 70.1, 70.2, 70.3, 70.4, 70.5 und 70.6 zugeführt werden, wie nachfolgend noch beschrieben wird.

In Fig. 4 wird wiederum die zu erwärmende Flüssigkeit, das Produkt, etwa ein Getränkesaft, durch die Produktzuleitung 1 dem Kurzzeiterhitzer zugeführt. Die Vorrichtung umfasst wiederum zwei Wärmetauscher 92 und 90. Die Wärmetauscher 92 und 90 sind beispielsweise seriell im Kurzzeiterhitzer vorgesehen. Der zweite Wärmetauscher 90 ist über eine Leitung 91 mit dem ersten Wärmetauscher 92 verbunden. Im zweiten Wärmetauscher 90 wird das durch die Leitung 1 zugeführte Produkt zumindest teilweise erwärmt. Das Produkt wird dann zur weiteren Erwärmung auf die gewünschte Zieltemperatur dem Wärmetauscher 92 zugeleitet. Der zweite Wärmetauscher 90 ist hinsichtlich der Erwärmung des Produkts parallel zu einer Wärmepumpe 80 vorgesehen, wie unten beschrieben.

Nach der Erwärmung auf die Zieltemperatur wird über eine Leitung 93, die rein schematisch gezeichnet ist, das Produkt einer Füllstation 15 zugeführt. Die Füllstation 15 entspricht den bereits oben geschilderten Füllstationen im Zusammenhang mit den Fig. 1 - 3. Rein schematisch ist wiederum durch das Bezugszeichen 17 angedeutet, dass die in Behälter 25 abgefüllte Flüssigkeit, wobei die Behälter 25 nachfolgend verschlossen sind, an die Kühlstrecke/den Kühltunnel 70 weitergegeben werden können. Dabei können die Abfüllvorrichtung und die Kühlstrecke räumlich getrennt voneinander vorgesehen sein. Gleiches gilt für den Kurzzeiterhitzer mit den Wärmetauschern 90 und 92.

Fig. 4 zeigt ferner die Wärmepumpe 80, die mit Wärmepumpenelement 81 zur Wärmeaufnahme auf der kühleren Seite der Wärmepumpe 80, und Wärmepumpenelement 84 zur Wärmeabgabe auf der wärmeren Seite der Wärmepumpe 80, versehen ist. Zwischen dem Element 81 und dem Element 84 ist ein Verdichter 82 sowie auf der gegenüberliegenden Seite eine Drossel 83 vorgesehen. Mit den Bezugszeichen 85 und 86 die Strömungsrichtung innerhalb des inneren Kreises der Wärmepumpe bezeichnet werden.

In der in Fig. 4 gezeigten Weiterbildung wird eine erste Kaskade, beispielsweise umfassend eine Gruppe von drei Kühlzellen 70.1, 70.2, 70.3, wobei eine beliebige andere Gruppierung möglich ist, mit dem Wärmetauscher 90 verbunden. D.h., die erwärmte Kühlflüssigkeit aus dieser Gruppe, typischerweise entnommen aus dem wärmsten Sammelbecken für Kühlflüssigkeit 73.1, wird über eine Zuleitung 78 und eine Pumpe 99 und einer weiteren Zuleitung 98 an den Wärmetauscher 90 geleitet, um Energie aus der ersten Kaskade auf das Produkt zu übertragen. Über eine Rückleitung 97 wird das Kühlmittel nach der erfolgten Wärmeübertragung wieder an die Gruppe zurückgeleitet. Dabei ist zu bemerken, dass es eine Verbindung zwischen den Elementen der Gruppe gibt. Die Verbindung wird mit den Bezugszeichen 74.1 und 74.2 bezeichnet.

Die Fig. 4 zeigt eine weitere Gruppe, die beispielhaft aus drei Kühlzellen 70.4, 70.5 und 70.6 besteht, wobei aber auch eine andere Gruppierung möglich ist. Diese Kühlzellen sind ebenfalls verbunden mit Verbindungselementen 74.4 und 74.5. Dabei wird aus der wärmsten der zweiten Kaskade, bestehend aus den Zellen 70.4, 70.5 und 70.6, d.h. aus der Zelle 70.4 und deren Sammelbecken 73.4 über eine Zuleitung 77 und eine Pumpe 89 Kühlmittel an die Wärmepumpe 80 geleitet. Nach Übertragung der Wärme aus dem Kühlmittel, das durch das Wärmepumpenelement 81 hindurchgeleitet wird, wird das nunmehr kühlere Kühlmittel wieder an die Zelle mit dem Bezugszeichen 70.6, also der kältesten der zweiten Gruppe, zurückgeleitet. Durch die hiermit vorgesehene parallele Erwärmung des Produkts mittels der Wärmetauscher 90 und der Wärmepumpe 80, kann eine effiziente Produktvorwärmung erzielt werden.

Für die in den Figuren 2 - 4 dargestellten Vorrichtungen kann die Erwärmung und Abkühlung des Produktes durch eine geeignete Computersteuerung, hier nicht gezeigt, gesteuert werden.

Es versteht sich, dass sinngemäß die gezeigten Vorrichtungen auch für eine gezielte Kühlung von Produkten zu kleinen Temperaturen hin verwendet werden können.

Es versteht sich, dass in den zuvor beschriebenen Ausführungsbeispielen genannte Merkmale sich nicht auf die speziell in den Figuren gezeigten Kombinationen beschränken, sondern auch in beliebigen anderen Kombinationen möglich sein können.

## Patentansprüche

1. Verfahren zur Heißabfüllung von Flüssigkeiten, insbesondere Säften, mit einem Kurzzeiterhitzer (12, 60, 62, 90, 92), der einen ersten Wärmetauscher (12, 62, 92) umfasst, einer Füllstation (15) zum Abfüllen der Flüssigkeiten in Behälter (25), beispielsweise Flaschen, und einem Kühltunnel (20, 70), der aus einer Mehrzahl von Kühlzellen (20.1 - 20.6, 70.1 - 70.6) besteht, zur Abkühlung der abgefüllten Behälter (25) mittels einer Kühlflüssigkeit, beispielsweise Wasser,
**dadurch gekennzeichnet, dass**
die Flüssigkeiten vor dem Abfüllen in Behälter (25) in der Füllstation (15) in dem Kurzzeiterhitzer (12, 60, 62, 90, 92) erwärmt werden, indem Wärmeenergie der beim Abkühlvorgang erwärmten Kühlflüssigkeit des Kühltunnels (20, 70) mittels einer separaten Wärmepumpe (30, 50, 80) zum Kurzzeiterhitzer (12, 60, 62, 90, 92) zugeführt wird.

2. Verfahren nach Anspruch 1, wobei die von der Wärmepumpe (30, 50, 80) zugeführte Wärmeenergie auf die Flüssigkeiten mittels des ersten Wärmetauschers (12, 62, 92) zu deren Erwärmung übertragen wird.

3. Verfahren nach wenigstens einem der Ansprüche 1 - 2, wobei das Erwärmen der Flüssigkeiten vollständig durch die mittels der Wärmepumpe (30, 50, 80) zugeführte Wärmeenergie geschieht.

4. Verfahren nach wenigstens einem der Ansprüche 1 - 3, wobei zum Erwärmen der Flüssigkeiten vor der Abfüllung zusätzlich ein zweiter Wärmetauscher (60, 90) in Reihe mit der Wärmepumpe (30, 50, 80) derart vorgesehen ist, dass die erwärmte Kühlflüssigkeit vom Kühltunnel (20, 70) zum zweiten Wärmetauscher (60, 90) und danach zur Wärmepumpe (30, 50, 80) gelangt; so dass zumindest ein Teil der Wärmeenergie der erwärmten Kühlflüssigkeit zunächst mittels des zweiten Wärmetauschers (60, 90) an die zu erwärmende Flüssigkeit übertragen werden kann und danach wenigstens ein weiterer Teil der Wärmeenergie mittels der Wärmepumpe (30, 50, 80) an den Kurzzeiterhitzer (12, 60, 62, 90, 92) zur weiteren Erwärmung der Flüssigkeiten übertragen werden kann.

5. Verfahren nach wenigstens einem der Ansprüche 1 - 4, wobei zum Erwärmen der Flüssigkeiten vor der Abfüllung zusätzlich ein zweiter Wärmetauscher (60, 90) parallel zur Wärmepumpe (30, 50, 80) derart vorgesehen ist, dass wenigstens ein Teil der erwärmten Kühlflüssigkeit vom Kühltunnel (20, 70) zum zweiten Wärmetauscher (60, 90) gelangt und wenigstens ein weiterer Teil der erwärmten Kühlflüssigkeit vom Kühltunnel (20, 70) zur Wärmepumpe (30, 50, 80) gelangt, so dass zumindest ein Teil der Wärmeenergie der erwärmten Kühlflüssigkeit mittels des zweiten Wärmetauschers (12, 62, 92) an die zu erwärmende Flüssigkeit übertragen werden kann, und wenigstens ein weiterer Teil der Wärmeenergie mittels der Wärmepumpe (30, 50, 80) an den Kurzzeiterhitzer (12, 60, 62, 90, 92) zur weiteren Erwärmung der Flüssigkeiten übertragen werden kann.

6. Verfahren nach Anspruch 5, wobei der Teil der erwärmten Kühlflüssigkeit, der zum zweiten Wärmetauscher (60, 90) gelangt, wärmer ist als der Teil der erwärmten Kühlflüssigkeit, der zur Wärmepumpe (30, 50, 80) gelangt.

7. Vorrichtung zur Heißabfüllung von Flüssigkeiten, insbesondere Säften, mit einem Kurzzeiterhitzer (12, 60, 62, 90, 92), der einen ersten Wärmetauscher (12, 62, 92) umfasst, einer Füllstation (15), einem Kühltunnel (20, 70), der aus einer Mehrzahl von Kühlzellen (20.1 - 20.6, 70.1 - 70.6) besteht, und einer separaten Wärmepumpe (30, 50, 80), zur Durchführung des Verfahrens zur Heißabfüllung von Flüssigkeiten nach einem der Ansprüche 1 - 6.

8. Vorrichtung nach Anspruch 7, wobei der Kurzzeiterhitzer (12, 60, 62, 90, 92), die Füllstation (15) und der Kühltunnel (20, 70) jeweils separat ausgebildet sind.

9. Vorrichtung nach Anspruch 8, wobei der erste Wärmetauscher (12, 62, 92) einen Plattenwärmetauscher oder einen Röhrenwärmetauscher umfasst

10. Vorrichtung nach wenigstens einem der Ansprüche 7 - 9, wobei die Wärmepumpe (30, 50, 80) eine Kompressionswärmepumpe, beispielsweise eine elektrisch angetriebene Kompressionswärmepumpe, eine Ammoniak-Wärmepumpe oder eine Wärmepumpe mit transkritischem CO₂-Prozess umfasst.

11. Vorrichtung nach wenigstens einem der Ansprüche 7 - 10, wobei die Wärmepumpe (30, 50, 80) zwischen einer der Kühlzellen (20.1 - 20.6, 70.1 - 70.6) des Kühltunnels (20, 70) und dem ersten Wärmetauscher (12, 62, 92) vorgesehen ist.

12. Vorrichtung nach Anspruch 11, wobei die Wärmepumpe (30, 50, 80) zwischen der Kühlzelle mit der höchstens Temperatur des erwärmten Kühlmittels und dem ersten Wärmetauscher (12, 62, 92) vorgesehen ist.

13. Vorrichtung nach wenigstens einem der Ansprüche 7 - 12, wobei die Kühlzellen (20.1-20.6, 70.1 - 70.6) derart miteinander verbunden sind, dass Kühlflüssigkeit von einer Kühlzelle in eine oder mehrere benachbarte Kühlzellen (20.1 - 20.6, 70.1 - 70.6) gepumpt werden kann, beispielsweise von einer kälteren Kühlzelle in eine wärmere Kühlzelle.

14. Vorrichtung nach wenigstens einem der Ansprüche 7 - 13, wobei jede der Kühlzellen (20.1 - 20.6, 70.1 - 70.6) eine Berieselungsanlage (21.1 - 21.6, 71.1 - 71.6) umfasst, um die Behälter (25) mit Kühlflüssigkeit zu besprühen.

15. Vorrichtung nach wenigstens einem der Ansprüche 7 - 14 in Kombination mit einem der Ansprüche 4 - 6, wobei im Kurzzeiterhitzer (12, 60, 62, 90, 92) die zu erwärmende Flüssigkeit den ersten und den zweiten Wärmetauscher (60, 90) durchfließt.

## Claims

1. Method for hot filling of liquids, in particular fruit juices, using a flash pasteuriser (12, 60, 62, 90, 92) comprising a first heat exchanger (12, 62, 92), a filling station (15) for filling the liquids into containers (25), for example bottles, and a cooling tunnel (20, 70) consisting of a plurality of cooling cells (20.1 - 20.6, 70.1 - 70.6) for cooling the filled container (25) by means of a cooling liquid, for example water,
**characterised in that**
the liquids are heated in the flash pasteuriser (12, 60, 62, 90, 92) prior to filling into containers (25) in the filling station (15) by feeding thermal energy from the cooling liquid of the cooling tunnel (20, 70) that was heated during the cooling process to the flash pasteuriser (12, 60, 62, 90, 92) by means of a separate heat pump (30, 50, 80).

2. Method according to claim 1, wherein the thermal energy supplied by the heat pump (30, 50, 80) to the liquids by means of the first heat exchanger (12, 62, 92) is transmitted to the heating thereof.

3. Method according to at least one of claims 1 or 2, wherein the heating of the liquids is performed completely by the thermal energy supplied by means of the heat pump (30, 50, 80).

4. Method according to at least one of claims 1 to 3, wherein a second heat exchanger (60, 90) is additionally provided in series with the heat pump (30, 50, 80) to heat the liquids such that the heated cooling liquid passes from the cooling tunnel (20, 70) to the second heat exchanger (60, 90) and thereafter to the heat pump (30, 50, 80); and consequently at least a portion of the thermal energy of the heated cooling liquid can be transferred to the liquid to be heated firstly by means of the second heat exchanger (60, 90) and thereafter at least one further portion of the thermal energy can be transferred to the flash pasteuriser (12, 60, 62, 90, 92) for further heating of the liquids by means of the heat pump (30, 50, 80).

5. Method according to at least one of claims 1 to 4, wherein a second heat exchanger (60, 90) is additionally provided parallel to the heat pump (30, 50, 80) for heating the liquids prior to filling, such that at least a portion of the heated cooling liquid passes from the cooling tunnel (20, 70) to the second heat exchanger (60, 90) and at least one further portion of the heated cooling liquid passes from the cooling tunnel (20, 70) to the heat pump (30, 50, 80), and consequently at least a portion of the thermal energy of the heated cooling liquid can be transferred to the liquid to be heated by means of the second heat exchanger (12, 62, 92), and at least one further portion of the thermal energy can be transferred to the flash pasteuriser (12, 60, 62, 90, 92) by means of the heat pump (30, 50, 80) for further heating of the liquids.

6. Method according to claim 5, wherein the portion of the heated cooling liquid, which reaches the second heat exchanger (60, 90) is warmer than the portion of the heated cooling liquid, which reaches the heat pump (30, 50, 80).

7. Device for hot filling of liquids, in particular fruit juices, using a flash pasteuriser (12, 60, 62, 90, 92), which comprises a first heat exchanger (12, 62, 92), a filling station (15), a cooling tunnel (20, 70), consisting of a plurality of cooling cells (20.1 - 20.6, 70.1 - is 70.6) and a separate heat pump (30, 50, 80) for carrying out the method for hot filling of liquids according to any one of claims 1 to 6.

8. Device according to claim 7, wherein the flash pasteuriser (12, 60, 62, 90, 92), the filling station (15) and the cooling tunnel (20, 70) are each configured separately.

9. Device according to claim 8, wherein the first heat exchanger (12, 62, 92) comprises a plate heat exchanger or a tubular heat exchanger.

10. Device according to at least one of claims 7 to 9, wherein the heat pump (30, 50, 80) comprises a compression heat pump, for example, an electrically driven compression heat pump, an ammonia heat pump or a heat pump with a transcritical CO₂ system.

11. Device according to at least one of claims 7 to 10, wherein the heat pump (30, 50, 80) is provided between one of the cooling cells (20.1 - 20.6, 70.1 - 70.6) of the cooling tunnel (20, 70) and the first heat exchanger (12, 62, 92 ).

12. Device according to claim 11, wherein the heat pump (30, 50, 80) is provided between the cooling cell at the maximum temperature of the heated cooling medium and the first heat exchanger (12, 62, 92).

13. Device according to at least one of claims 7 to 12, wherein the cooling cells (20.1 - 20.6, 70.1 - 70.6) are connected to one another such that cooling liquid can be pumped from a cooling cell into one or more adjacent cooling cells (20.1 - 20.6 - 70.1, 70.6), for example from a colder cooling cell to a warmer cooling cell.

14. Device according to at least one of claims 7 to 13, wherein each of the cooling cells (20.1 - 20.6, 70.1 - 70.6) comprises a sprinkler system (21.1 - 21.6, 71.1-71.6) in order to spray the container (25) with cooling liquid.

15. Device according to at least one of claims 7 to 14 in combination with any one of claims 4 to 6, wherein in the flash pasteuriser (12, 60, 62, 90, 92) the liquid to be heated flows through the first and the second heat exchanger (60, 90).

## Revendications

1. Procédé pour conditionner à chaud des liquides, par remplissage, notamment des sirops, comprenant un réchauffeur instantané (12, 60, 62, 90, 92), qui comporte un premier échangeur de chaleur (12, 62, 92), et comprenant un poste de remplissage (15) pour conditionner les liquides, par remplissage, dans des contenants (25), comme par exemple des bouteilles, et un tunnel de refroidissement (20, 70), qui est constitué de plusieurs cellules courtes (20.1-20.6, 70.1-70.6), pour refroidir au moyen d'un liquide de refroidissement, comme par exemple de l'eau, les contenants (25) ayant été remplis,
**caractérisé en ce que** les liquides, avant leur conditionnement par remplissage dans des contenants (25) dans le poste de remplissage (15), sont échauffés dans le réchauffeur instantané (12, 60, 62, 90, 92), grâce au fait que de l'énergie calorifique du liquide de refroidissement du tunnel de refroidissement (20, 70), ayant été échauffé lors de la phase de refroidissement, est fournie au réchauffeur instantané (12, 60, 62, 90, 92) au moyen d'une pompe à chaleur (30, 50, 80) séparée.

2. Procédé selon la revendication 1, d'après lequel l'énergie calorifique fournie par la pompe à chaleur (30, 50, 80), est transférée aux liquides pour leur échauffement, au moyen du premier échangeur de chaleur (12, 62, 92).

3. Procédé selon l'une au moins des revendications 1 - 2, d'après lequel l'échauffement des liquides se fait en totalité au moyen de l'énergie calorifique fournie au moyen de la pompe à chaleur (30, 50, 80).

4. Procédé selon l'une au moins des revendications 1 - 3, d'après lequel pour échauffer les liquides avant le conditionnement par remplissage, il est prévu, en plus, un deuxième échangeur de chaleur (60, 90) en série avec la pompe à chaleur (30, 50, 80), de façon à ce que le liquide de refroidissement échauffé parvienne du tunnel de refroidissement (20, 70) au deuxième échangeur de chaleur (60, 90) et ensuite à la pompe à chaleur (30, 50, 80), de sorte qu'au moins une partie de l'énergie calorifique du liquide de refroidissement ayant été échauffé peut être transmise au liquide à échauffer, tout d'abord au moyen du deuxième échangeur de chaleur (60, 90), et qu'ensuite au moins une autre partie de l'énergie calorifique peut être transmise au réchauffeur instantané (12, 60, 62, 90, 92) au moyen de la pompe à chaleur (30, 50, 80), pour la poursuite du réchauffement des liquides.

5. Procédé selon l'une au moins des revendications 1 - 4, d'après lequel pour échauffer les liquides avant le conditionnement par remplissage, il est prévu, en plus, un deuxième échangeur de chaleur (60, 90) en parallèle avec la pompe à chaleur (30, 50, 80), de façon à ce qu'au moins une partie du liquide de refroidissement échauffé parvienne du tunnel de refroidissement (20, 70) au deuxième échangeur de chaleur (60, 90), et au moins une autre partie du liquide de refroidissement échauffé parvienne du tunnel de refroidissement (20, 70) à la pompe à chaleur (30, 50, 80), de sorte qu'au moins une partie de l'énergie calorifique du liquide de refroidissement ayant été échauffé peut être transmise au liquide à échauffer, au moyen du deuxième échangeur de chaleur (12, 62, 92), et qu'au moins une autre partie de l'énergie calorifique peut être transmise au réchauffeur instantané (12, 60, 62, 90, 92) au moyen de la pompe à chaleur (30, 50, 80), pour la poursuite du réchauffement des liquides.

6. Procédé selon la revendication 5, d'après lequel la partie du liquide de refroidissement ayant été échauffé, qui parvient au deuxième échangeur de chaleur (60, 90), est plus chaude que la partie du liquide de refroidissement ayant été échauffé, qui parvient à la pompe à chaleur (30, 50, 80).

7. Dispositif pour conditionner à chaud des liquides, par remplissage, notamment des sirops, comprenant un réchauffeur instantané (12, 60, 62, 90, 92), qui comporte un premier échangeur de chaleur (12, 62, 92), et comprenant également un poste de remplissage (15), un tunnel de refroidissement (20, 70), qui est constitué de plusieurs cellules courtes (20.1-20.6, 70.1-70.6), et une pompe à chaleur (30, 50, 80) séparée, pour la mise en oeuvre du procédé pour conditionner à chaud des liquides, par remplissage, selon l'une des revendications 1 - 6.

8. Dispositif selon la revendication 7, dans lequel le réchauffeur instantané (12, 60, 62, 90, 92), le poste de remplissage (15) et le tunnel de refroidissement (20, 70) sont réalisés chacun séparément.

9. Dispositif selon la revendication 8, dans lequel le premier échangeur de chaleur (12, 62, 92) est constitué par un échangeur de chaleur à plaques ou un échangeur de chaleur à tubes.

10. Dispositif selon l'une au moins des revendications 7 - 9, dans lequel la pompe à chaleur (30, 50, 80) est une pompe à chaleur à compression, par exemple une pompe à chaleur à compression entraînée électriquement, une pompe à chaleur à ammoniaque ou une pompe à chaleur à processus CO₂ transcritique.

11. Dispositif selon l'une au moins des revendications 7 - 10, dans lequel la pompe à chaleur (30, 50, 80) est prévue entre une des cellules de refroidissement (20.1-20.6, 70.1-70.6) du tunnel de refroidissement (20, 70) et le premier échangeur de chaleur (12, 62, 92).

12. Dispositif selon la revendication 11, dans lequel la pompe à chaleur (30, 50, 80) est prévue entre la cellule de refroidissement avec la température la plus élevée du liquide de refroidissement ayant été échauffé, et le premier échangeur de chaleur (12, 62, 92).

13. Dispositif selon l'une au moins des revendications 7 - 12, dans lequel les cellules de refroidissement (20.1-20.6, 70.1-70.6) sont reliées les unes aux autres de manière telle, que du liquide de refroidissement puisse être pompé d'une cellule de refroidissement dans une ou plusieurs cellules de refroidissement (20.1-20.6, 70.1-70.6) voisines, par exemple d'une cellule de refroidissement plus froide dans une cellule de refroidissement plus chaude.

14. Dispositif selon l'une au moins des revendications 7 - 13, dans lequel chacune des cellules de refroidissement (20.1-20.6, 70.1-70.6) comprend une installation d'arrosage (21.1-21.6, 71.1-71.6), pour arroser les contenants (25) avec du liquide de refroidissement.

15. Dispositif selon l'une au moins des revendications 7 - 14, en combinaison avec une des revendications 4 - 6, dans lequel à l'intérieur du réchauffeur instantané (12, 60, 62, 90, 92), le liquide à échauffer s'écoule à travers le premier et le deuxième échangeur de chaleur (60, 90).
